# EUROPÄISCHE PATENTSCHRIFT

(11) **EP 1 970 737 B1**
(45) Veröffentlichungstag und Bekanntmachung des Hinweises auf die Patenterteilung: **24.10.2012**
(21) Anmeldenummer: 07007887.8
(22) Anmeldetag: 18.04.2007
(51) Int. Cl.: G02B 6/44, H02G 1/08

(54) **Dichtungskörper einer Kabelmuffe**
Sealing element for a Cable box
Joint d'etanchéité pour un passage de cable

(30) Priorität: 14.03.2007 DE 202007003989 U
(43) Veröffentlichungstag der Anmeldung: 17.09.2008
(73) Patentinhaber: CCS Technology, Inc., Wilmington, DE 19803 (US)
(72) Erfinder: Müller, Thorsten, 58708 Menden (DE); Eichstädt, Andreas, 58675 Hemer (DE); Pitzul, Uwe, 58099 Hagen (DE); Küppermann, Achim, 58239 Schwerte (DE); Thibault, Simon, 58135 Hagen (DE); Pröckl, Sandra Stefanie, 82008 Unterhaching (DE)
(74) Vertreter: Sturm, Christoph

(56) Entgegenhaltungen:
- EP-A- 0 790 265
- EP-A1- 0 010 576
- EP-A1- 0 514 174
- EP-A1- 0 942 303
- WO-A-01/41276
- WO-A-99/56370
- DE-A1- 19 513 914
- DE-U1-202006 006 019
- DE-U1-202006 006 020
- US-A- 3 744 008
- US-A- 4 098 772
- US-A- 4 102 716
- US-A- 4 705 724
- US-A- 5 104 930
- US-A- 5 775 702
- US-A1- 2002 149 157

## Beschreibung

Die Erfindung betrifft einen Dichtungskörper einer Kabelmuffe nach dem Oberbegriff des Anspruchs 1.

Kabelmuffen zur strukturierten Ablage bzw. Handhabung von in Lichtwellenleiterkabeln geführten Lichtwellenleitern werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine entscheidenden Rolle zu, damit die Übertragungseigenschaften der Lichtwellenleiter nicht negativ beeinträchtigt werden.

Aus der DE 20 2006 006 019 U1 sowie der DE 20 2006 006 020 U1 sind jeweils Dichtungskörper einer Kabelmuffe bekannt, die ein mittleres, zylinderartiges Dichtungskörpersegment sowie mehrere zylindersegmentartige Dichtungskörpersegmente umfassen, wobei jedes zylindersegmentartige Dichtungskörpersegment in eine Ausnehmung des mittleren, zylinderartigen Dichtungskörpersegments einführbar ist. Jedes in eine Ausnehmung des mittleren, zylinderartigen Dichtungskörpersegments einführbares zylindersegmentartige Dichtungskörpersegment verfügt über ein gelartiges Dichtungselement, welches mit Hilfe eines Druckelements komprimierbar ist.

Das gelartige Dichtungselement ist hierzu zwischen zwei formstabilen Endstücken positioniert, wobei auf eines der beiden Endstücke eine Kraft über das Druckelement aufgebracht werden kann, um das gelartige Dichtungselement zu komprimieren. In das gelartige Dichtungselement jedes zylindersegmentartigen Dichtungskörpersegments ist eine Ausnehmung eingebracht, die der Aufnahme eines abzudichtenden Kabels dient. An beiden Enden der Ausnehmung ragt in dieselbe jeweils ein Federelement hinein, um das abzudichtende Kabel in der Ausnehmung zu zentrieren und um beim Komprimieren ein Abfließen des gelartigen Dichtungselements zu verhindern.

Nach der DE 20 2006 006 019 U1 sowie der DE 20 2006 006 020 U1 ist die in das gelartige Dichtungselement eines zylindersegmentartigen Dichtungskörpersegments eingebrachte Ausnehmung derart konturiert, dass dieselbe zwischen den in die Ausnehmung hineinragenden Federelementen einen konstanten Innendurchmesser aufweist, der größer ist als der Außendurchmesser eines abzudichtenden Kabels. Daraus folgt, dass nach diesem Stand der Technik erst dann eine Abdichtung eines abzudichtenden Kabels gewährleistet werden kann, wenn das gelartige Dichtungselement des entsprechenden zylindersegmentartigen Dichtungskörpersegments mit Hilfe des jeweiligen Druckelements komprimiert worden ist. Um hierbei für abzudichtende Kabel mit unterschiedlichen Außendurchmessern eine gute Abdichtung zu gewährleisten, müssen für eine Vielzahl unterschiedlicher Außendurchmesser abzudichtender Kabel entsprechende Dichtungskörpersegmente mit entsprechend dimensionierten Ausnehmungen im Bereich der gelartigen Dichtungselemente bereitgehalten werden.

Hiervon ausgehend liegt der vorliegenden Erfindung das Problem zu Grunde, einen neuartigen Dichtungskörper einer Kabelmuffe zu schaffen.

Dieses Problem wird dadurch gelöst, dass der eingangs genannte Dichtungskörper durch die Merkmale des kennzeichnenden Teils des Anspruchs 1 weitergebildet ist. Erfindungemäß ist die Ausnehmung zwischen den beiden Federelementen konisch konturiert.

Erfindungsgemäß ist die Ausnehmung eines gelartigen Dichtungselements eines Dichtungskörpersegments zwischen den beiden Federelementen, die in die Ausnehmung hineinragen, konisch konturiert. Bei einer derart konturierten Ausnehmung kann ein Dichtungskörpersegment für eine Vielzahl unterschiedlicher Außendurchmesser von abzudichtenden Kabeln verwendet werden. Hierdurch erhöht sich die Flexibilität.

Nach einer vorteilhaften Weiterbildung der Erfindung ist die Ausnehmung zwischen den beiden Federelementen derart konisch konturiert, dass sich ein Innendurchmesser der Ausnehmung in der Richtung, in der eine Komprimierkraft auf das gelartige Dichtungselement aufbringbar ist, verjüngt bzw. verringert, wobei der Innendurchmesser der Ausnehmung zumindest benachbart zu dem in der Richtung der Komprimierkraft gesehen hinteren Federelement kleiner als ein Außendurchmesser des abzudichtenden Kabels ist.

Bedingt dadurch, dass benachbart zu dem in Richtung der Komprimierkraft gesehen hinteren Federelement der Innendurchmesser der Ausnehmung kleiner ist als der Außendurchmesser des abzudichtenden Kabels, wird bereits bei einem nicht komprimierten, gelartigen Dichtungselement eine gewisse Abdichtung gewährleistet, die selbstverständlich durch Komprimieren des gelartigen Dichtungselements mit Hilfe des Druckelements erhöht werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: ein Dichtungskörpersegment eines Dichtungskörpers in perspektivischer Ansicht, und
- Fig. 2:: das Dichtungskörpersegment der Fig. 1 zusammen mit einem Kabel.

Die Erfindung betrifft einen Dichtungskörper einer Kabelmuffe, insbesondere einen Dichtungskörper, wie er hinsichtlich seinen prinzipiellen Aufbaus bereits aus der DE 20 2006 006 019 U1 bzw. der DE 20 2006 006 020 U1 bekannt ist. Ein derartiger Dichtungskörper verfügt über ein mittleres, zylinderartiges Dichtungskörpersegment, wobei an einer äußeren Mantelfläche des mittleren Dichtungskörpersegments mehrere Ausnehmungen ausgebildet sind, und wobei in jede der Ausnehmungen des mittleren Dichtungskörpersegments jeweils ein zylindersegmentartiges Dichtungskörpersegment einführbar ist.

Auf den Offenbarungsgehalt der DE 20 2006 006 019 U1 sowie den Offenbarungsgehalt der DE 20 2006 006 020 U1 wird an dieser Stelle durch Verweis explizit Bezug genommen. Der Offenbarungsgehalt dieser Schriften soll Bestandteil dieser Anmeldung sein.

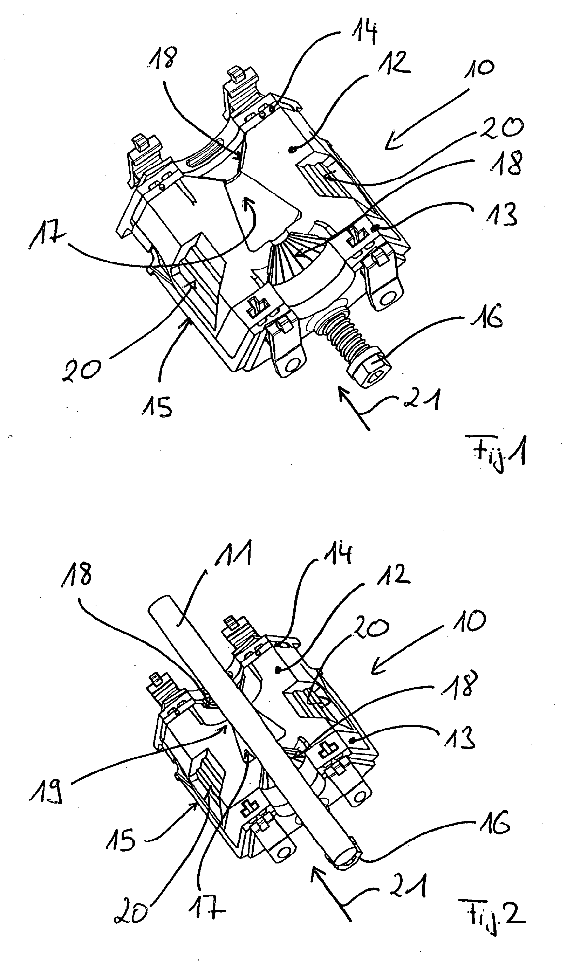

Fig. 1 und 2 zeigen ein zylindersegmentartiges Dichtungskörpersegment 10, insbesondere zur Verwendung bei einem Dichtungskörper nach der DE 20 2006 006 019 U1 bzw. der DE 20 2006 006 020 U1. Fig. 1 zeigt das zylindersegmentartige Dichtungskörpersegment 10 ohne abzudichtendes Kabel, Fig. 2 zeigt hingegen dasselbe mit einem abzudichtenden Kabel 11.

Das Dichtungskörpersegment 10 umfasst ein gelartiges Dichtungselement 12, welches zwischen zwei formstabilen Endstücken 13, 14 angeordnet ist. Das gelartige Dichtungselement 12 sowie die beiden Endstücke 13, 14 finden in einem Gehäuse 15 des Dichtungskörpersegments 10 Aufnahme. Über ein Druckelement 16, welches im gezeigten Ausführungsbeispiel als Stellschraube ausgebildet ist, ist auf eines der Endstücke, nämlich auf das Endstück 13, eine Kraft ausübbar, um so die beiden Endstücke 13, 14 aufeinander zu zu bewegen und hierbei das gelartige Dichtungselement 12 zu komprimieren.

In das gelartige Dichtungselement 12 ist eine Ausnehmung 17 eingebracht, die der Aufnahme des abzudichtenden Kabels 11 dient. Zu beiden Enden bzw. Seiten der Ausnehmung 17 ragt in dieselbe ein Federelement 18 hinein, die der Zentrierung des abzudichtenden Kabels 11 in der Ausnehmung 17 dienen. Die Federelemente 18 verhindern, dass beim Komprimieren des gelartigen Dichtungselements 12 dasselbe abfließt.

Im Sinne der hier vorliegenden Erfindung ist die Ausnehmung 17 zwischen den zu beiden Enden in dieselbe hineinragenden Federelementen 18 konisch konturiert. Fig. 1 kann entnommen werden, dass sich ein Innendurchmesser der Ausnehmung 17 in der Richtung (Pfeil 21), in der über das Druckelement 16 eine Komprimierkraft auf das gelartige Dichtungselement 12 aufgebracht werden kann, kontinuierlich verjüngt bzw. verringert.

Benachbart zu dem in Richtung der Komprimierkraft gesehen hinteren Federelement 18 verfügt die Ausnehmung 17 über einen Innendurchmesser, der kleiner ist als der Außendurchmesser des abzudichtenden Kabels 11, und zwar für jedes abzudichtende Kabel 11. Demnach wird bereits bei einem nichtkomprimierten, gelartigen Dichtungselement 12 ein Dichtbereich 19 zwischen dem gelartigen Dichtungselement 12 und einem in die Ausnehmung 17 desselben eingelegten, abzudichtenden Kabel 11 geschaffen.

Dieser Dichtbereich 19 ist benachbart zu dem in Richtung (Pfeil 21) der Komprimierkraft gesehen hinteren Federelement 18 ausgebildet und fällt bei einem unkomprimierten, gelartigen Dichtungselement um so größer aus, je größer der Außendurchmesser des abzudichtenden Kabels 11 ist.

Über das Druckelement 16 kann das gelartige Dichtungselement 12 stärker komprimiert werden, wobei sich dann das gelartige Dichtungselement 12 stärker an das abzudichtende Kabel 11 anschmiegt. Bei der Komprimierung des gelartigen Dichtungselements 12 kann überschüssiges Dichtungsmaterial in den Bereich von Ausnehmungen 20 ausweichen, die seitlich in das gelartige Dichtungselement 12 eingebracht sind.

Als Dichtungsmaterial für das gelartige Dichtungselement 12 findet vorzugsweise ein weiches Dichtungsmaterial, wie z. B. ein Polyurethan-Gel oder ein Silikon-Gel, Verwendung. Dies hat den Vorteil, dass das gelartige Dichtungsmaterial beim Komprimieren des gelartigen Dichtungselements 12 leicht verformbar ist und sich über einen relativ großen Bereich am abzudichtenden Kabel 11 anschmiegt.

Dann, wenn als Dichtungsmaterial für das gelartige Dichtungselement 12 ein Polyurethan-Gel Verwendung findet, weist dasselbe vorzugsweise zumindest folgende Bestandteile bzw. Inhaltsstoffe auf:
- 29 ± 10 Gew.-% Polyol;
- 4,5 ± 1 Gew.-% Isocyanat MDI;
- 60 ± 10 Gew.-% Weichmacher;
- maximal 1 Gew.-% Antioxidanz;
- maximal 0,5 Gew.-% Ruß.

Bevorzugt weist das Polyurethan-Gel zumindest folgende Bestandteile bzw. Inhaltsstoffe auf:
- 29 ± 7 Gew.-% Polyol;
- 4,5 ± 0,5 Gew.-% Isocyanat MDI;
- 60 ± 5 Gew.-% Weichmacher;
- 0,4 ± 0,1 Gew.-% Antioxidanz;
- 0,4 ± 0,1 Gew.-% Ruß.

Als Weichmacher findet vorzugsweise Diisononylphthalat DINP Verwendung. Als Antioxidanz findet vorzugsweise ein Antioxidanz aus der Gruppe der Bisalkylthiomethyl-orthokresole Verwendung. Weiterhin können die obigen Polyurethan-Gele maximal 0,3 Gew.-%, bevorzugt 0,15 ± 0,05 Gew.-%, Katalysator, insbesondere Coscat 83, und maximal 2,0 Gew.-%, bevorzugt 1,5 ± 0,2 Gew.-%, Trockenmittel, insbesondere Sylosiv A3, als Prozesshilfsmittel aufweisen.

Beispiele für bevorzugte Zusammensetzungen des Polyurethan-Gels sind:

### Beispiel 1:

- 23,8 Gew.-% Polyol, nämlich Voranol und Caradol und Simulsol;
- 4,4 Gew.-% Isocyanat MDI;
- 69,3 Gew.-% Weichmacher, nämlich DINP;
- 0,5 Gew.-% Antioxidanz;
- 0,5 Gew.-% Ruß;
- 0,2 Gew.-% Katalysator;
- 1,3 Gew.-% Trockenmittel.

### Beispiel 2:

- 27,3 Gew.-% Polyol, nämlich Voranol und Caradol und Simulsol;
- 4,2 Gew.-% Isocyanat MDI;
- 66,3 Gew.-% Weichmacher, nämlich DINP;
- 0,4 Gew.-% Antioxidanz;
- 0,4 Gew.-% Ruß;
- 0,1 Gew.-% Katalysator;
- 1,3 Gew.-% Trockenmittel.

### Beispiel 3:

- 34,2 Gew.-% Polyol, nämlich Voranol und Caradol und Simulsol;
- 4,9 Gew.-% Isocyanat MDI;
- 58,2 Gew.-% Weichmacher, nämlich DINP;
- 0,5 Gew.-% Antioxidanz;
- 0,4 Gew.-% Ruß;
- 0,1 Gew.-% Katalysator;
- 1,7 Gew.-% Trockenmittel.

Unabhängig davon, ob als Dichtungsmaterial für das gelartige Dichtungselement 12 ein Polyurethan-Gel oder ein Silikon-Gel Verwendung findet, weist dasselbe zumindest folgende Eigenschaften auf: eine Härte gemäß Shore 000, bestimmt nach ASTM D 2240 bei 23°C, zwischen 20 und 60; eine Wasserabsorption, bestimmt nach DIN EN ISO 62-1 über 24 Stunden bei 70°C, von maximal 5%, insbesondere von maximal 1%; einen spezifischen elektrischen Durchgangswiderstand, bestimmt nach DIN IEC 60093, von mindestens 10¹⁰ Ohm cm, insbesondere von mindestens 10¹² Ohm cm

Weiterhin weist das als Polyurethan-Gel oder als Silikon-Gel ausgeführte Dichtungsmaterial eine derartige Chemikalienbeständigkeit, bestimmt nach ISO 175, auf, dass sich die Härte und vorzugsweise das Gewicht desselben nach einer Einlagerung in einer Schwefelsäure und/oder in einer Natronlauge und/oder in einem Tensid über 168 Stunden bei 23°C, um maximal 10%, insbesondere um maximal 5%, bevorzugt um maximal 3%, verändert.

Dabei erfolgt die Einlagerung des Dichtungsmaterials vorzugsweise in der Schwefelsäure 3% H₂SO₄, vorzugsweise in der Natronlauge 0,2N NaOH und vorzugsweise in dem Tensid 10% Igepal CO 630.

Weitere vorteilhafte Eigenschaften des Dichtungsmaterials, das als Polyurethan-Gel oder als Silikon-Gel ausgeführt ist, sind eine mikrobiologische Beständigkeit gegenüber Bewuchs durch Mikroorganismen, bestimmt nach ISO 846, der Rate 1, insbesondere der Rate 0; und eine bleibende Druckverformung, bestimmt nach DIN ISO 815 bei einer Testdauer von 24 Stunden bei 90°C, zwischen 40% und 60%.

Das als Polyurethan-Gel oder als Silikon-Gel ausgeführte Dichtungsmaterial weist eine derartige thermische Alterung, bestimmt nach ISO 188 über 30 Tage bei 90°C, auf, dass sich die Härte desselben um maximal 10%, insbesondere um maximal 5%, bevorzugt um maximal 3%, verändert.

### Bezugszeichenliste

- 10: Dichtungskörpersegment
- 11: Kabel
- 12: gelartiges Dichtungselement
- 13: Endstück
- 14: Endstück
- 15: Gehäuse
- 16: Druckelement
- 17: Ausnehmung
- 18: Federelement
- 19: Dichtbereich
- 20: Ausnehmung
- 21: Komprimierkraftrichtung

## Patentansprüche

1. Dichtungskörper einer Kabelmuffe, mit mindestens einem Dichtungskörpersegment, wobei das oder jedes Dichtungskörpersegment ein gelartiges Dichtungselement umfasst, wobei das gelartige Dichtungselement durch Aufbringen einer Kraft mittels mindestens eines Druckelements auf mindestens ein formstabiles, das gelartige Dichtungselement an einer Seite begrenzendes Endstück komprimierbar ist, wobei in das gelartige Dichtungselement eine der Aufnahme eines abzudichtenden Kabels dienende Ausnehmung eingebracht ist, und wobei an beiden Enden in die Ausnehmung hineinragende Federelemente das abzudichtende Kabel in der Ausnehmung zentrieren und beim Komprimieren ein Abfließen des gelartigen Dichtungselements verhindern, **dadurch gekennzeichnet, dass** die Ausnehmung (17) zwischen den beiden Federelementen (18) konisch konturiert ist.

2. Dichtungskörper nach Anspruch 1, **dadurch gekennzeichnet, dass** die Ausnehmung (17) zwischen den beiden Federelementen (18) derart konisch konturiert ist, dass sich ein Innendurchmesser der Ausnehmung in der Richtung, in der eine Komprimierkraft auf das gelartige Dichtungselement (12) aufbringbar ist, verjüngt bzw. verringert.

3. Dichtungskörper nach Anspruch 2, **dadurch gekennzeichnet, dass** sich der Innendurchmesser der Ausnehmung (17) in der Richtung der Komprimierkraft kontinuierlich verjüngt bzw. verringert.

4. Dichtungskörper nach Anspruch 2 oder 3, **dadurch gekennzeichnet, dass** der Innendurchmesser der Ausnehmung (17) zumindest benachbart zu dem in der Richtung der Komprimierkraft auf gesehen hinteren Federelement (18) kleiner als ein Außendurchmesser des abzudichtenden Kabels ist.

5. Dichtungskörper nach einem der Ansprüche 1 bis 4, **dadurch gekennzeichnet, dass** das gelartige Dichtungselement aus einem Dichtungsmaterial mit folgenden Eigenschaften gebildet ist:
a) eine Härte gemäß Shore 000, bestimmt nach ASTM D 2240 bei 23°C, zwischen 20 und 60;
b) eine Wasserabsorption, bestimmt nach DIN EN ISO 62-1 über 24 Stunden bei 70°C, von maximal 5%;
c) einen spezifischen elektrischen Durchgangswiderstand, bestimmt nach DIN IEC 60093, von mindestens 10¹⁰ Ohm cm.

6. Dichtungsmaterial nach Anspruch 5, **dadurch gekennzeichnet, dass** dasselbe eine derartige Chemikalienbeständigkeit, bestimmt nach ISO 175, aufweist, dass sich die Härte desselben nach einer Einlagerung in einer Schwefelsäure und/oder in einer Natronlauge und/oder in einem Tensid über 168 Stunden bei 23°C, um maximal 10%, insbesondere um maximal 5%, bevorzugt um maximal 3%, verändert.

7. Dichtungsmaterial nach Anspruch 5 oder 6, **dadurch gekennzeichnet, dass** dasselbe derartige eine thermische Alterung, bestimmt nach ISO 188 über 30 Tage bei 90°C, aufweist, dass sich die Härte desselben um maximal 10% verändert.

8. Dichtungsmaterial nach einem der Ansprüche 5 bis 7, **dadurch gekennzeichnet, dass** dasselbe eine mikrobiologische Beständigkeit gegenüber Bewuchs durch Mikroorganismen, bestimmt nach ISO 846, der Rate 1, insbesondere der Rate 0, aufweist.

9. Dichtungsmaterial nach einem der Ansprüche 5 bis 8, **dadurch gekennzeichnet, dass** dasselbe eine bleibende Druckverformung, bestimmt nach DIN ISO 815 bei einer Testdauer von 24 Stunden bei 90°C, zwischen 40% und 60% aufweist.

10. Dichtungsmaterial nach einem der Ansprüche 5 bis 9, **dadurch gekennzeichnet, dass** dasselbe ein Polyurethan-Gel ist.

11. Dichtungsmaterial nach Anspruch 10, **dadurch gekennzeichnet, dass** dasselbe zumindest folgende Bestandteile aufweist:
- 29 t 10 Gew.-% Polyol;
- 4,5 ± 1 Gew.-% Isocyanat MDI;
- 60 ± 10 Gew.-% Weichmacher;
- maximal 1 Gew.-% Antioxidanz;
- maximal 0,5 Gew.-% Ruß.

12. Dichtungsmaterial nach Anspruch 11, **dadurch gekennzeichnet; dass** dasselbe zumindest folgende Bestandteile aufweist:
- 29 ± 7 Gew.-% Polyol;
- 4,5 ± 0,5 Gew.-% Isocyanat MDI;
- 60 ± 5 Gew.-% Weichmacher;
- 0,4 ± 0,1 Gew.-% Antioxidanz;
- 0,4 ± 0,1 Gew.-% Ruß.

13. Dichtungsmaterial nach einem der Ansprüche 5 bis 9, **dadurch gekennzeichnet, dass** dasselbe ein Silikon-Gel ist.

## Claims

1. Sealing body for a cable sleeve having at least one sealing body segment, wherein the or each sealing body segment comprises a gel-like sealing element, wherein the gel-like sealing element is compressible by application of a force by means of at least one pressure element onto at least one dimensionally stable end piece, which delimits the gel-like sealing element on one side, wherein a cutout serving to receive a cable to be sealed off is introduced into the gel-like sealing element, and wherein spring elements which protrude into the cutout at both ends centre the cable to be sealed off in the cutout and prevent the gel-like sealing element from flowing away during compression, **characterized in that** the cutout (17) has a conical contour between the two spring elements (18).

2. Sealing body according to Claim 1, **characterized in that** the cutout (17) has a conical contour between the two spring elements (18) such that an inner diameter of the cutout tapers or is reduced in the direction in which a compressing force can be applied to the gel-like sealing element (12).

3. Sealing body according to Claim 2, **characterized in that** the inner diameter of the cutout (17) tapers or is reduced continuously in the direction of the compressing force.

4. Sealing body according to Claim 2 or 3, **characterized in that** the inner diameter of the cutout (17) at least adjacent to the rear spring element (18), when viewed in the direction of the compressing force, is smaller than an outer diameter of the cable to be sealed off.

5. Sealing body according to one of Claims 1 to 4, **characterized in that** the gel-like sealing element is formed from a sealing material having the following properties:
a) an OOO Shore hardness, determined according to ASTM D 2240 at 23°C, of between 20 and 60;
b) a water absorption, determined according to DIN EN ISO 62-1 over 24 hours at 70°C, of at most 5%;
c) a volume resistivity, determined according to DIN IEC 60093, of at least 10¹⁰ ohm cm.

6. Sealing material according to Claim 5, **characterized in that** said sealing material has such a chemical resistance, determined according to ISO 175, that the hardness thereof, after incorporation in a sulphuric acid and/or in a sodium hydroxide solution and/or in a surfactant over 168 hours at 23°C, changes by at most 10%, in particular by at most 5%, preferably by at most 3%.

7. Sealing material according to Claim 5 or 6, **characterized in that** said sealing material has such thermal ageing, determined according to ISO 188 over 30 days at 90°C, that the hardness thereof changes by at most 10%.

8. Sealing material according to one of Claims 5 to 7, **characterized in that** said sealing material has a microbiological resistance with respect to growth of microorganisms, determined according to ISO 846, of rate 1, in particular of rate 0.

9. Sealing material according to one of Claims 5 to 8, **characterized in that** said sealing material has a compression set, determined according to DIN ISO 815 with a test duration of 24 hours at 90°C, of between 40% and 60%.

10. Sealing material according to one of Claims 5 to 9, **characterized in that** said sealing material is a polyurethane gel.

11. Sealing material according to Claim 10, **characterized in that** said sealing material has at least the following constituents:
- 29 ± 10% by weight of polyol;
- 4.5 ± 1% by weight of isocyanate MDI;
- 60 ± 10% by weight of plasticizer;
- a maximum of 1% by weight of antioxidant;
- a maximum of 0.5% by weight of carbon black.

12. Sealing material according to Claim 11, **characterized in that** said sealing material has at least the following constituents:
- 29 ± 7% by weight of polyol;
- 4.5 ± 0.5% by weight of isocyanate MDI;
- 60 ± 5% by weight of plasticizer;
- 0.4 ± 0.1 % by weight of antioxidant;
- 0.4 ± 0.1% by weight of carbon black.

13. Sealing material according to one of Claims 5 to 9, **characterized in that** said sealing material is a silicone gel.

## Revendications

1. Corps d'étanchéité d'un manchon de câble, comprenant au moins un segment de corps d'étanchéité, dans lequel le ou chaque segment de corps d'étanchéité comprend un élément d'étanchéité de type gel, dans lequel l'élément d'étanchéité de type gel peut être comprimé par application d'une force au moyen d'au moins un élément de pression sur au moins une partie d'extrémité de forme stable et adjacent à un côté de l'élément d'étanchéité de type gel dans lequel un évidement destiné à recevoir un câble à étanchéifier est ménagé dans l'élément d'étanchéité de type gel et dans lequel deux éléments à ressort s'étendant dans l'évidement aux deux extrémités permettent de centrer le câble à étanchéifier dans l'évidement et, lors d'une compression, empêchent une sortie de l'élément d'étanchéité de type gel, **caractérisé en ce que** l'évidement (17) présente un profil de forme conique entre les deux éléments de ressort (18).

2. Corps d'étanchéité selon la revendication 1, **caractérisé en ce que** l'évidement (17) est profilé de manière conique entre les deux éléments de ressort (18) de telle sorte qu'un diamètre intérieur de l'évidement se rétrécisse ou se réduise dans la direction dans laquelle une force de compression peut être appliquée à l'élément d'étanchéité de type gel (12).

3. Corps d'étanchéité selon la revendication 2, **caractérisé en ce que** le diamètre intérieur de l'évidement (17) se rétrécit ou se réduit de manière continue dans la direction de la force de compression.

4. Corps d'étanchéité selon la revendication 2 ou 3, **caractérisé en ce que** le diamètre intérieur de l'évidement (17), du moins au voisinage de l'élément de ressort (18) arrière vu dans la direction de la force de compression, est plus faible qu'un diamètre extérieur du câble à étanchéifier.

5. Corps d'étanchéité selon l'une quelconque des revendications 1 à 4, **caractérisé en ce que** l'élément d'étanchéité de type gel est constitué d'un matériau d'étanchéité ayant les propriétés suivantes :
a) une dureté Shore 000, déterminée selon la norme ASTM D 2240 à 23°C, comprise entre 20 et 60 ;
b) une absorption d'eau, déterminée selon la norme DIN EN ISO 62-1 pendant 24 heures à 70°C, d'au plus 5 % ;
c) une résistivité électrique transversale, déterminée selon la norme DIN IEC 60093, d'au moins 10¹⁰ Ohm cm.

6. Matériau d'étanchéité selon la revendication 5, **caractérisé en ce qu'**il présente une résistance chimique, déterminée selon la norme ISO 175, telle que sa dureté se modifie après un stockage dans de l'acide sulfurique et/ou dans une solution d'hydroxyde de sodium et/ou dans un agent tensioactif pendant 168 heures à 23°C, soit d'au plus 10 %, notamment d'au plus 5 %, et de préférence d'au plus 3 %.

7. Matériau d'étanchéité selon la revendication 5 ou 6, **caractérisé en ce qu'**il présente un vieillissement thermique, déterminé selon la norme ISO 188 pendant 30 jours à 90°C, tel que sa dureté se modifie d'au plus 10 %.

8. Matériau d'étanchéité selon l'une quelconque des revendications 5 à 7, **caractérisé en ce qu'**il présente une résistance microbiologique à l'encrassement par des micro-organismes, déterminée selon la norme ISO 846, de taux 1, et plus particulièrement, de taux 0.

9. Matériau d'étanchéité selon l'une quelconque des revendications 5 à 8, **caractérisé en ce qu'**il présente une déformation permanente à la compression, déterminée selon la norme DIN ISO 815 pour une durée de test de 24 heures à 90°C, comprise entre 40 % et 60 %.

10. Matériau d'étanchéité selon l'une quelconque des revendications 5 à 9, **caractérisé en ce qu'**il s'agit d'un gel de polyuréthane.

11. Matériau d'étanchéité selon la revendication 10, **caractérisé en ce qu'**il comprend au moins les composants suivants :
- 29 ± 10 % en poids de polyol ;
- 4,5 ± 1 % en poids d'isocyanate MDI ;
- 60 ± 10 % en poids de plastifiant ;
- au plus 1 % en poids d'antioxydant ;
- au plus 0,5 % en poids de suie.

12. Matériau d'étanchéité selon la revendication 11, **caractérisé en ce qu'**il comprend au moins les constituants suivants:
- 29 ± 7 % en poids de polyol ;
- 4,5 ± 0,5 % en poids d'isocyanate MDI ;
- 60 ± 5 % en poids de plastifiant ;
- 0,4 ± 0,1 % en poids d'antioxydant ;
- 0,4 ± 0,1 % en poids de suie.

13. Matériau d'étanchéité selon l'une quelconque des revendications 5 à 9, **caractérisé en ce qu'**il s'agit d'un gel de silicone.
